(19)

Europäisches Patentamt

European Patent Office

Office européen des brevets

(11) **EP 3 118 775 A1**

(12) **EUROPEAN PATENT APPLICATION**

published in accordance with Art. 153(4) EPC

(43) Date of publication:
**18.01.2017 Bulletin 2017/03**

(21) Application number: **15761020.5**

(22) Date of filing: **13.03.2015**

(51) Int Cl.:
***G06K 9/64*** *(2006.01)*

(86) International application number:
**PCT/CN2015/074160**

(87) International publication number:
**WO 2015/135493 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.03.2014  CN 201410093089**

(71) Applicants:
- **ZTE Corporation**
  **Shenzhen, Guangdong 518057 (CN)**
- **Peking University**
  **Beijing 100871 (CN)**

(72) Inventors:
- **DUAN, Lingyu**
  **Shenzhen**
  **Guangdong 518057 (CN)**

- **LU, Ping**
  **Shenzhen**
  **Guangdong 518057 (CN)**
- **CHEN, Jie**
  **Shenzhen**
  **Guangdong 518057 (CN)**
- **JIA, Xia**
  **Shenzhen**
  **Guangdong 518057 (CN)**
- **WANG, Yitong**
  **Shenzhen**
  **Guangdong 518057 (CN)**
- **LIU, Ming**
  **Shenzhen**
  **Guangdong 518057 (CN)**
- **HUANG, Tiejun**
  **Shenzhen**
  **Guangdong 518057 (CN)**

(74) Representative: **Lavoix**
**Bayerstrasse 83**
**80335 München (DE)**

(54) **METHOD AND DEVICE FOR COMPRESSING LOCAL FEATURE DESCRIPTOR, AND STORAGE MEDIUM**

(57)   A method for compressing a local feature descriptor includes that: at least one local feature descriptor of a target image is selected; and multi-stage vector quantization is carried out on the selected at least one local feature descriptor according to a pre-set code book, and the local feature descriptor is quantized as a feature code stream, wherein the feature code stream includes serial numbers of code words obtained by means of the multi-stage vector quantization. A device for compressing a local feature descriptor and a storage medium are also provided.

Fig. 1

```
┌──────────────────────────────────┐  101
│ At least one local feature descriptor of a target │
│              image is selected              │
└──────────────────────────────────┘
                   │
                   ▼
┌──────────────────────────────────┐  102
│ Multi-stage vector quantization is carried out on │
│ the selected at least one local feature descriptor │
│   according to a pre-set code book, and the local  │
│  feature descriptor is quantized as a feature code │
│                   stream                   │
└──────────────────────────────────┘
```

EP 3 118 775 A1

## Description

## TECHNICAL FIELD

The present disclosure relates to the field of computer image processing, and in particular to a method and device for compressing a local feature descriptor, and a storage medium.

## BACKGROUND

As smart devices and mobile Internet are popularized, mobile visual searches are more and more widely applied, wherein related arts for local feature descriptors have been widely applied to the mobile visual searches. In the conventional art, it is generally needed to inquire and match images by means of local feature descriptors in image retrieval. However, due to limits to bandwidths, memories and computing capability, it is often needed to compress the local feature descriptors, so as to achieve compact expression. Meanwhile, image databases are scaled up increasingly, so it is also needed to compress local feature descriptors of database images, so as to reduce the consumption of magnetic disks.

At present, there are two image retrieval methods based on a mobile device, including:

1. A mobile device extracts local feature descriptors of an inquired image, compresses the extracted local feature descriptors, and then transmits the compressed local feature descriptors to a server by a wireless network. The server decompresses the compressed local feature descriptors, carries out database retrieval, and sends a retrieved result to the mobile device.

2. A mobile device compresses an inquired image and transmits the compressed image to a server. The server decompresses the compressed image, extracts descriptors, carries out database retrieval, and sends a retrieved result to a client.

However, the first image retrieval method has the disadvantages that the whole retrieval process takes a long time and occupies a large memory space due to complicated computation and huge code books in a process of compressing local feature descriptors. Meanwhile, since the compressed local feature descriptors do not have controllability in compression ratio and compression accuracy, information will be often lost or excessive bandwidths will be often occupied, so the compression loss is great, thereby causing a worse retrieved result or a longer retrieval response time. Thus, an image compression algorithm is limited in capability, and the image retrieval method is higher in computing quantity, so the process of extracting local feature descriptors by a low-performance mobile device will greatly consume time, thereby severely influencing the response time of the server, and reducing the retrieval efficiency.

The second image retrieval method has the disadvantages that the transmitted compressed image loses information due to limited compression capability of a conventional image compression method, or the performance of image retrieval and the transmission time are influenced due to occupation of excessive bandwidths. In addition, an image transmission method will transfer an image decompression process, a descriptor extraction process and the like to the server. In such a way, the computing pressure of the server is further increased.

Consequently, in image retrieval methods in the conventional art, in the case where the computing power, memory and mobile bandwidth of a mobile device are limited, the speed and accuracy of image retrieval will be greatly limited, which causes reduction of the user experience.

## SUMMARY

In view of this, the embodiments of the present disclosure are intended to provide a method and device for compressing a local feature descriptor, and a storage medium, capable of reducing the occupation of a memory, reducing the computing complexity and improving the speed and accuracy of retrieval in an image retrieval process.

To this end, the technical solutions of the embodiments of the present disclosure are implemented as follows.

A method for compressing a local feature descriptor may include that:

at least one local feature descriptor of a target image is selected; and

multi-stage vector quantization is carried out on the selected at least one local feature descriptor according to a pre-set code book, and the selected at least one local feature descriptor is quantized as a feature code stream,

wherein the feature code stream includes serial numbers of code words obtained by the multi-stage vector quantization.

In the solution, after the at least one local feature descriptor of the target image is selected, the method may further include that: the selected at least one local feature descriptor is transformed.

In the solution, the code words may be basic vectors identical to the currently quantized at least one local feature descriptor in dimension.

In the solution, the step that the multi-stage vector quantization is carried out on the selected at least one local feature descriptor according to the pre-set code book may include that:

the selected at least one local feature descriptor is segmented;

each segment of the at least one local feature descriptor is quantized using the pre-set code book, and a current-stage quantization code word vector is obtained; and

the current-stage quantization code word vectors obtained by quantizing all segments of the at least one local feature descriptor are spliced, a residual vector obtained by subtracting a result obtained by splicing the current-stage quantization code word vectors from the selected at least one original local feature descriptor is computed, the residual vector is re-segmented and re-quantized, and next-stage quantization code word vectors are obtained.

In the solution, the serial numbers of the code words included in the feature code stream and obtained by the multi-stage vector quantization may be: serial numbers of original-local-feature-descriptor quantization code words and serial numbers of multi-stage-residual-vector quantization code words.

In the solution, when quantization is non-destructive quantization, the method may further include that: a final quantization residual is entropy-coded.

A device for compressing a local feature descriptor may include:

a descriptor acquisition unit, configured to select at least one local feature descriptor of a target image; and

a quantization unit, configured to carry out multi-stage vector quantization on the selected at least one local feature descriptor according to a pre-set code book, and quantize the selected at least one local feature descriptor as a feature code stream,

wherein the feature code stream includes serial numbers of code words obtained by means of the multi-stage vector quantization.

In the solution, the device may further include a transformation unit, configured to transform, after the at least one local feature descriptor of the target image is selected, the selected at least one local feature descriptor.

In the solution, the device may further include: a segmentation unit, configured to segment the selected at least one local feature descriptor.

Correspondingly, the quantization unit may be configured to: quantize each segment of the at least one local feature descriptor using the pre-set code book, and obtain a current-stage quantization code word vector; and splice the current-stage quantization code word vectors obtained by quantizing all segments of the at least one local feature descriptor, and compute a residual vector obtained by subtracting a result obtained by splicing the current-stage quantization code word vectors from the selected at least one original local feature descriptor.

The segmentation unit may be further configured to: re-segment the residual vector.

The quantization unit may be further configured to: re-quantize the residual vector, and obtain next-stage quantization code word vectors.

In the solution, the device may further include an entropy-coding unit, configured to entropy-code, when quantization is non-destructive quantization, a final quantization residual.

An embodiment of the present disclosure also provides a computer storage medium which has stored therein computer programs for executing the method for compressing a local feature descriptor according to the above embodiment of the present disclosure.

The embodiments of the present disclosure provide a method and device for compressing a local feature descriptor, and a storage medium. At least one local feature descriptor of a target image is selected; and multi-stage vector quantization is performed on the selected at least one local feature descriptor according to a pre-set code book, and the local feature descriptor is quantized to be a feature code stream, wherein the feature code stream includes serial numbers of code words obtained by the multi-stage vector quantization. The code words are basic vectors identical to the currently selected at least one local feature descriptor in dimension, and an image descriptor of an image is expressed using the basic vectors, such that a space smaller than the local feature descriptor is occupied, thereby achieving the compression effect.

In the embodiments of the present disclosure, an original local feature descriptor of an image is compressed using a multi-stage vector quantization technology, such that the compressed local feature descriptor has characteristics including visual information holding and compact expression. According to the selection quantity of local feature descriptors and the difference of quantization levels, the compressed local feature descriptor can transmit residuals with different numbers and gradients, thereby providing high scalability. In such a way, the occupation of a memory can be reduced, the computing complexity can be lowered, and the speed and accuracy of retrieval in an image retrieval process can be improved.

## BRIEF DESCRIPTION OF THE DRAWINGS

Fig. 1 is a flowchart of a method for compressing a local feature descriptor according to embodiment 1 of the present disclosure;

Fig. 2 is a flowchart of a method for compressing a local feature descriptor according to embodiment 2 of the present disclosure; and

Fig. 3 is a structural diagram of a device for compressing a local feature descriptor according to an embodiment of the present disclosure.

## DETAILED DESCRIPTION

In the embodiments of the present disclosure, at least one local feature descriptor of a target image is selected; and multi-stage vector quantization is performed on the selected at least one local feature descriptor according to a pre-set code book, and the at least one local feature descriptor is quantized to be a feature code stream, wherein the feature code stream includes serial numbers of code words obtained by the multi-stage vector quantization.

Here, the code book is a pre-set quantization dictionary, namely a set of code words. The code words are basic vectors identical to a currently quantized local feature descriptor in dimension. A final compression result is composed of serial numbers of the code words, and the serial numbers of the code words included in the feature code stream and obtained by the multi-stage vector quantization are: serial numbers of original-local-feature-descriptor quantization code words and serial numbers of multi-stage-residual-vector quantization code words. An image descriptor of an image is expressed using the basic vectors, such that a space smaller than the local feature descriptor is occupied, thereby achieving the compression effect. For example, for a two-dimensional local feature descriptor, there are two code words (0, 0) and (1, 1) in the code book; if a closest point of a local feature descriptor in distance is (0, 0), the local feature descriptor is quantized as (0, 0); and if a closest point in distance is (1, 1), the local feature descriptor is quantized as (1, 1). In an expression process, the occurrence frequencies of the code words (0, 0) and (1,1) may be used for expression. Thus, the compression effect can be achieved.

Here, descriptors refer to image descriptors, representing or describing an image or an object in the image. The descriptors are divided into global descriptors and local feature descriptors. The descriptors herein refer to the local feature descriptors.

The local feature descriptors are descriptors which have illumination and geometric transform invariance properties and are constructed using local information starting from a local structure of an image. The local feature descriptors describe area information in an image, and the local feature descriptors embody unique descriptiveness in view of the difference of pixels, colours or textures between areas. Describing the image using the local feature descriptors can convert a complicated image matching problem into a feature vector measurement problem, thereby improving the speed and robustness of an algorithm. The formats of the local feature descriptors are not clearly defined, which may be vectors or may be matrices. Most of the local feature descriptors can be converted into vectors.

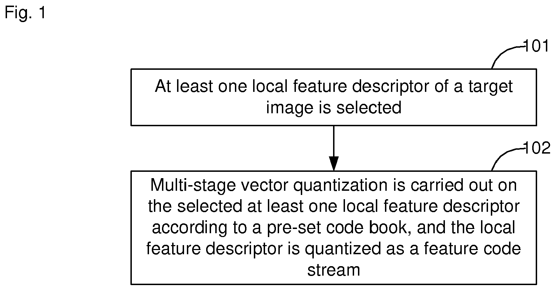

The implementation of the technical solutions of the embodiments of the present disclosure will be described below in conjunction with the drawings and the embodiments in detail. Fig. 1 is a flowchart of a method for compressing a local feature descriptor according to embodiment 1 of the present disclosure. As shown in Fig. 1, the method includes the steps as follows.

Step 101: At least one local feature descriptor of a target image is selected,

wherein the step that the at least one local feature descriptor of the target image is selected includes that: local feature descriptors of the target image are acquired, and at least one local feature descriptor is selected from all the local feature descriptors according to bit limits and the attributes of the local feature descriptors.

Here, the bit limits are limits to the length of a bit stream of a local feature descriptor in a current environment; and the attributes of a local feature descriptor are attribute information such as a scale, a coordinate, a response peak value and a position about the local feature descriptor. The embodiments of the present disclosure are illustrated with the attributes of only several local feature descriptors, and the range of the attributes of the local feature descriptors is not limited.

For example, in the process of selecting at least one local feature descriptor from all the local feature descriptors, transmission bandwidths will be often differently needed for different application environments. Thus, bit stream lengths of the local feature descriptors will be limited, and these features will influence selection of the local feature descriptors. Mobile visual search applications demanded in real time need transmission of fewer bit streams, and non-real-time applications has no severe demand for transmission bandwidths. As a single local feature descriptor occupies a certain number of bits, fewer local feature descriptors can be transmitted while the total bit amount is less limited under the bit limit in an actual environment. Thus, a subset of all local feature descriptors can be selected according to the attributes of the local feature descriptors, a subsequent compression process is executed, and the selection scalability of a local feature descriptor is achieved. The embodiments of the present disclosure do not limit selection modes of a local feature descriptor. The common modes include model-based feature selection and the like.

For example, all local feature descriptors of a target image are acquired using a local feature descriptor extraction algorithm; and current bit limits are determined according to input parameters, and then local feature descriptors are selected using a relevant feature point selection algorithm, and a subset of original local feature descriptors is obtained, where the size of the subset is decided by the bit limits.

In the present embodiment, the local feature descriptors may be any local feature descriptors applicable to local feature expression of an image, or may be any other feature vectors. In the present embodiment, a Scale Invariant Feature Transform (SIFT) descriptor is taken an example. The process of selecting at least one local feature descriptor from all local feature descriptors according to the bit limits and the attributes of the local feature descriptors is introduced. Here, all SIFT descriptors may be acquired in an existing extraction mode, which will not be elaborated in the present embodiment.

In the embodiments of the present disclosure, for local feature descriptors, a feature point selection model is trained offline according to information such as an SIFT scale, a coordinate and a response peak value, a data set of matching point pairs and a data set of non-matching point pairs are constructed, value ranges of four attributes namely an SIFT scale, a coordinate, a response peak value and an distance to the image centre are quantized using a statistical method, the number of matching points and the number of non-matching points within each attribute range are calculated, and a score of each attribute range is obtained by dividing a total number by the number of the corresponding matching points, wherein the total number of the matching points and the non-matching points is the sum of the number of the matching points and the number of the non-matching points.

A score of importance of an SIFT feature is a score of a range of attributes corresponding to successive multiplication of an SIFT scale, a coordinate, a response peak value and a distance to an image centre. All of the acquired local feature descriptors are ranked by importance, and descriptors ranked in the top by importance are selected as a subset. In the present embodiment, in the case where the total bit amount is limited to 4096 bytes, all of the acquired local feature descriptors are ranked by importance using a feature point selection model, descriptors are ranked in the top 300 are selected usually, and if the number of the local feature descriptors of an image is smaller than 300, all of the local feature descriptors are selected. The local feature descriptors are subsequently compressed, such that a finally acquired bit stream is not greater than 4096 bytes. In the case where the total bit amount is limited to 16384 bytes, all of the acquired local feature descriptors are ranked by importance using the feature point selection model, wherein descriptors are ranked in the top 900 are selected usually, while if the number of the local feature descriptors of an image is smaller than 900, all of the local feature descriptors are selected; the local feature descriptors are subsequently compressed, such that a finally acquired bit stream is not greater than 16384 bytes. Here, the number of local feature descriptors is decided according to the property of an image. The local feature descriptors carry out description on the basis of interest points of an image, therefore, the number of the interest points of the image is decided according to the property of the image and an interest-point detection algorithm.

After the at least one local feature descriptor of the target image is selected, the method may further include that: the selected at least one local feature descriptor is transformed.

The transformation of the selected at least one local feature descriptor includes, but is not limited to, orthogonal transformation of the selected at least one local feature descriptor.

In the embodiments of the present disclosure, orthogonal transformation is taken as an example. The orthogonal transformation may be transformation of any orthogonal transformation algebraic definition, such as Discrete Cosine Transform (DCT) and Karhunen-Loeve (KL) Transform. In the embodiments of the present disclosure, the step of orthogonally transforming the selected at least one local feature descriptor is optional. The local feature descriptor may be not transformed. The energy of the local feature descriptor can be gathered in corresponding successive dimensions by transformation of the local feature descriptor, and the energy distribution of local feature descriptor vectors is changed, such that information is gathered in some dimensions, subsequent loss of quantization information is smaller, and subsequent operations can be facilitated. In the present embodiment, DCT is taken as an example. After DCT is carried out on SIFT local feature descriptors, most pieces of information contained by the local feature descriptor will be contained in low-frequency areas, namely first several to dozens of dimensions after transformation.

Step 102: Multi-stage vector quantization is carried out on the selected at least one local feature descriptor according to a pre-set code book, and the at least one local feature descriptor is quantized as a feature code stream,

wherein the feature code stream includes serial numbers of code words obtained by the multi-stage vector quantization, and the serial numbers of the code words include serial numbers of original-local-feature-descriptor quantization code words and serial numbers of multi-stage-residual-vector quantization code words.

The step that the multi-stage vector quantization is carried out on the selected at least one local feature descriptor according to the pre-set code book includes that:

a selected local feature descriptor is segmented, so as to form a plurality of segmented local feature descriptors; each segment of the local feature descriptor is quantized using the pre-set code book, so as to obtain a current-stage quantization code word vector; and the current-stage quantization code word vectors obtained by quantizing all segments of the local feature descriptor are spliced, a residual vector obtained by subtracting a result obtained by splicing the current-stage quantization code word vectors from the selected original local feature descriptor is computed, and the residual vector is re-segmented and re-quantized, so as to obtain next-stage quantization code word vectors.

For example, a randomly selected local feature descriptor can be decomposed into a plurality of segments so as to form a plurality of segmented local feature descriptors, and the dimensions of each segmented local feature descriptor may be identical or different. Here, a local feature descriptor may be not segmented. It is to note that the segmented local feature descriptors may be not successive in dimension. It can be considered that original local feature descriptors are recombined in dimension as needed, and then are re-arranged and divided. By means of segmentation, the memory overhead of the adopted quantization code book can be lower under the condition that segmentation and non-segmentation have the same quantization error. By means of segmentation, subsequent matching can be accelerated. That is, a distance between vectors after segmentation can be obtained by accumulating a table of pre-computed distances between segments.

The process of segmenting a local feature descriptor includes that:

A k-dimension local feature descriptor V: V={v1,v2,......,vk} can be divided into V={Vi1,Vi2,......,Vin}, where

$$Vi1=\{vi1\text{-}1,vi1\text{-}2,......,vi1\text{-}k\}$$

$$Vi2=\{vi2\text{-}1,vi2\text{-}2,......,vi2\text{-}k\}$$

$$......$$

$$Vin=\{vin\text{-}1,vin\text{-}2,......,vin\text{-}k\}$$

The connection of Vi1,Vi2, ........, Vin can be regarded as one of full permutations of the local feature descriptor V. For example, a 128-dimension SIFT descriptor which is represented as S:

$$S=\{s0,s2,......,s127\}$$

can be divided into four segmented local feature descriptors:

$$S1=\{s0,s1,......,s31\}$$

$$S2=\{s32,s33,......,s63\}$$

$$S3=\{s64,s65,......,s95\}$$

$$S4=\{s96,s97,......,s127\}$$

Different segmentation mechanisms can be adopted for different bit limits. For example, in the present embodiment, when the total bit amount is limited to 512 bytes, segmentation is not carried out; and when the total bit amount is limited to 1024 bytes, the 128-dimension SIFT descriptor is equally divided into four segments, each segment having 12 bits. Thus, each local feature descriptor can be expressed as 4*12bit=6bytes, and meanwhile, 1024/6 local feature descriptors are selected to be processed.

The step that the multi-stage vector quantization is carried out on the selected local feature descriptors includes that: next-level vector quantization is repeatedly carried out on a residual formed by subtracting the quantized local feature descriptors from the original local feature descriptors.

If the at least one local feature descriptor is segmented before the multi-stage vector quantization is carried out on the at least one local feature descriptor in Step 102, then the step that the multi-stage vector quantization is carried out on the selected at least one local feature descriptor and the local feature descriptor is quantized as the feature code stream refers to that: multi-stage vector quantization is carried out on the segmented local feature descriptors, and the segmented local feature descriptors are quantized to be a feature code stream; each segment of the local feature descriptors is quantized using the pre-set code book, so as to obtain a current-stage quantization code word vector; and the current-stage quantization code word vectors obtained by quantizing all segments of the local feature descriptor are spliced, a residual vector obtained by subtracting a result obtained by splicing the current-stage quantization code word vectors from the selected original local feature descriptor is computed, and the residual vector is re-segmented and re-quantized, so as to obtain next-stage quantization code word vectors. Or, in the embodiments of the present disclosure, non-segmentation of a local feature descriptor is an exception of segmentation of a local feature descriptor, and is equivalent to division of a local feature descriptor into only one segment.

Each local feature descriptor is quantized using the pre-set code book so as to form code words. Here, the dimension of the code book shall match with the dimension of a current local feature descriptor, and the code words are basic vectors having the same dimension as the current local feature descriptor.

An image descriptor of an image is expressed using the basic vectors, such that a space smaller than the local feature descriptor is occupied, thereby achieving the compression effect. By taking a simple quantization as an example, for a two-dimensional local feature descriptor, there are two code words (0, 0) and (1,1) in the code book; if a closest point of a local feature descriptor in distance is (0, 0), the local feature descriptor is quantized as (0, 0); and if a closest point in distance is (1, 1), the local feature descriptor is quantized as (1, 1). In an expression process, the occurrence frequencies of the code words (0, 0) and (1,1) can be used for expression. Thus, the compression effect can be achieved.

Here, a code book training method includes, but is not limited to, a traditional K-means clustering method. The number of code words in the code book can be set according to actual memory restraints and relevant conditions. In the present embodiment, the code book training method adopts a K-means method, and a code book is obtained by a sample data training cluster centre. A distance measurement mode adopts a traditional Euclidean distance.

It is to note that under different bit limit conditions, the code book can be shared so as to reduce the memory consumption of a quantizer. For example, an SIFT descriptor is divided into four segments of 32-dimension segmented local feature descriptors in the present embodiment. When the total bit amount of the local feature descriptors is limited to 1024 bytes, each segment corresponds to four code books, respectively corresponding to a segmented local feature descriptor, and each code book has 128 code words. When the total bit amount of the local feature descriptors is limited to 2048 and 4096 bytes, code books are shared, each segment corresponds to eight code books, respectively corresponding to a segmented local feature descriptor, and each code book has 64 code words. Thus, storage spaces of 8*64*16=8192 dimension units can be saved for the memory of the quantizer.

In one embodiment, next-level re-segmentation and re-quantization can be repeatedly carried out on a residual formed by subtracting a quantized local feature descriptor from an original local feature descriptor according to a quantization hierarchy demand, so as to improve the quantization accuracy until the demand is met.

For example, after a local feature descriptor is quantized, corresponding code words, namely a segment of basic vectors, are obtained. The obtained basic vectors are combined in an original order so as to obtain a quantized local feature descriptor. A residual vector formed by subtracting the quantized local feature descriptor from the original local feature descriptor can train a code book of the residual vector with reference to a previous quantization mode, and quantize the residual vector. A quantization vector of the residual vector and the previously-formed quantized descriptor are added to form a new-level quantized descriptor, and meanwhile, the new-level quantized descriptor and the original local feature descriptor form a new residual. This step can be continuously executed until a quantization demand is met. Here, the quantization demand may refer to that a quantization error between the original local feature descriptor and the quantized descriptor is smaller than a certain threshold, or may be a pre-set quantization hierarchy parameter. If non-destructive quantization is needed, a residual vector on the last layer can be entropy-coded.

Here, the quantization process is as follows.

An original local feature descriptor Vorigin=V

Each segment of segmented vectors of a k-dimension local feature descriptor V={Vi1,Vi2,.......Vin} (Vi1-Vin are segmented vectors therein) can be quantized, using a code book, as:

$$Vi1 \rightarrow C1, \text{ corresponding vector } Vj1$$

$$Vi2 \rightarrow C2, \text{ corresponding vector } Vj2$$

$$\ldots\ldots$$

$$Vin \rightarrow Cn, \text{ corresponding vector } Vjn$$

where C1 to Cn are code words in the code book and are repeatable (corresponding vectors Vj1 to Vjn are repeatable), so a quantized descriptor is Vq={Vj1,Vj2,......,Vjn}, a residual is E=Vorigin-Vq={Vi1-Vj1,Vi2-Vj2,......,Vin-Vjn}.

If it is needed to carry out next-hierarchy quantization, then E serves as V(E=V), V is sub-quantized to obtain a new quantized descriptor Vq2=Vq+Vq2, and a residual is E=Vorigin-Vq2.

It is to note that for different hierarchies of residual vectors, segmentation modes may be identical or different, and code books may be identical or different. Under different bit limit conditions, code books for quantizing residual vectors may be shared as well, so as to reduce the memory consumption of the quantizer. In the present embodiment, when the total bit amount of a local feature descriptor is limited to 1024 bytes, a residual vector is no longer quantized; and when the total bit amount of a local feature descriptor is limited to 2048 bytes, a residual vector is quantized to be one of 16 code words using a code book.

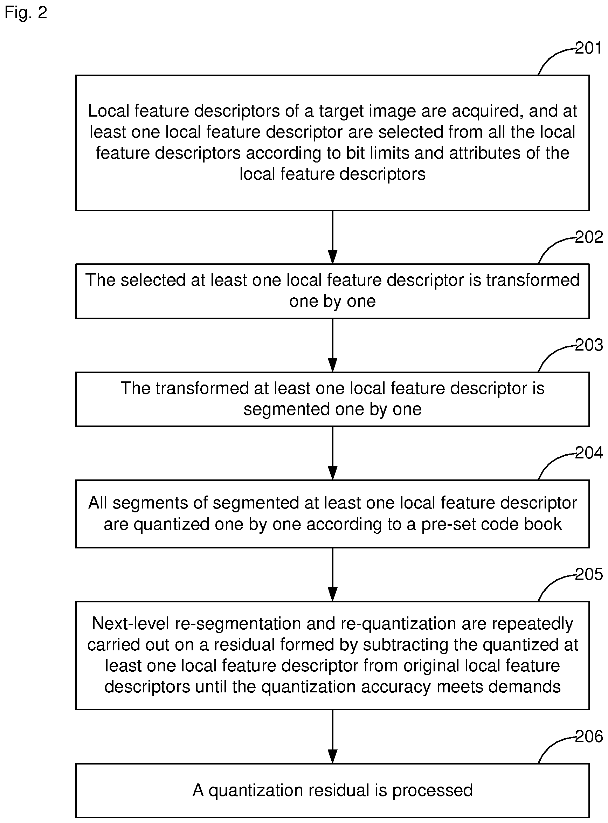

Fig. 2 shows a flowchart of a method for compressing a local feature descriptor according to embodiment 2 of the present disclosure. In the present embodiment, before a local feature descriptor is quantized, the local feature descriptor is orthogonally transformed and segmented, such that the energy of the segmented local feature descriptor is gathered at successive dimensions as far as possible.

Step 201: Local feature descriptors of a target image are acquired, and at least one local feature descriptor is selected from all the local feature descriptors according to bit limits and the attributes of the local feature descriptors.

Here, the bit limits are limits to the length of a bit stream of a local feature descriptor in a current environment; and the attributes of a local feature descriptor are attribute information such as a scale, a coordinate, a response peak value and a position about the local feature descriptor. The embodiments of the present disclosure are illustrated with attributes of only several local feature descriptors, and the range of the attributes of the local feature descriptors is not limited.

Step 202: The selected at least one local feature descriptor is transformed one by one.

The transformation of the selected at least one local feature descriptor includes, but is not limited to, orthogonal transformation of the selected at least one local feature descriptor.

In the embodiments of the present disclosure, orthogonal transformation is taken as an example. The orthogonal transformation may be transformation of any orthogonal transformation algebraic definition, such as DCT and KL Transform.

Step 203: The transformed at least one local feature descriptor is segmented one by one.

The local feature descriptors have been orthogonally transformed in the above steps, and accordingly, dimensions where energy or information is gathered are finely segmented while other dimensions are roughly segmented or not segmented.

Here, standards for fine segmentation and rough segmentation may be manually set according to actual demands. For example, for dimensions where energy or information is gathered, when a local feature descriptor is 1024 bytes, the local feature descriptor can be divided into four segments, each segment having 12 bits. Thus, each local feature descriptor can be expressed as 4*12bit=6bytes. Meanwhile, 1024/6 local feature descriptors are selected to be coded. For other dimensions, a local feature descriptor may be divided into two segments or may be not segmented.

Step 204: All segments of the segmented at least one local feature descriptor are quantized one by one according to a pre-set code book, and the segmented local feature descriptors are quantized as feature code streams,

wherein the feature code streams include serial numbers of code words obtained by multi-stage vector quantization.

Step 205: Next-level re-segmentation and re-quantization are repeatedly carried out on a residual formed by subtracting the quantized at least one local feature descriptor from original local feature descriptors until the quantization accuracy meets demands.

For example, a current bit limit is determined according to a previously input parameter, a quantization hierarchy corresponding to the current bit limit is read into a memory, and then a corresponding segmentation parameter and a corresponding code book are read according to the quantization hierarchy; subsequently, it is determined whether a current quantization hierarchy reaches the quantization hierarchy corresponding to the current bit limit; if the last layer is reached, quantization is stopped, and bits corresponding to compressed descriptor quantization code words are output; and otherwise, the quantization code words are reduced to a quantized descriptor, a residual vector obtained by subtracting the quantized descriptor from an original local feature descriptor is taken as new input, the current bit limit and the current hierarchy are determined according to the previously input parameter, the corresponding segmentation parameter and code book are re-read from a storage unit, and a residual vector is segmented and quantized according to the corresponding segmentation parameter and code book. Every time quantization is ended, it is needed to re-determine whether the current quantization hierarchy reaches the quantization hierarchy corresponding to the current bit limit. As long as the quantization hierarchy reaches the last layer of a parameter requirement, quantization is stopped.

Step 206: A quantization residual is processed; if input quantization is needed to be destructive quantization, a current residual is directly discarded; and if input quantization is needed to be destructive quantization, the quantization residual is entropy-coded.

A process of decompressing a local feature descriptor is an inverse process relative to a process of compressing a local feature descriptor. Firstly, code words on the last layer for descriptor decompression are obtained, and feature vectors are reduced according to the code words. Then, feature vectors on all layers are sequentially reduced, all of the feature vectors are superposed to form a quantized local feature descriptor, and if previous quantization is non-destructive, it is also needed to entropy-decode the compressed residual vector on the last layer and to superpose same to the quantized local feature descriptor, so as to form a non-destructive original local feature descriptor. Finally, the compressed local feature descriptor is reversely transformed, so as to obtain a decompressed local feature descriptor.

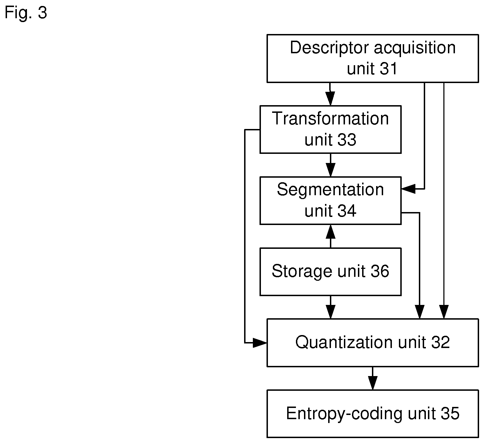

An embodiment of the present disclosure also provides a device for compressing a local feature descriptor. As shown in Fig. 3, the device includes a descriptor acquisition unit 31 and a quantization unit 32, wherein

the descriptor acquisition unit 31 is configured to select at least one local feature descriptor of a target image, wherein selecting, by the descriptor acquisition unit 31, the at least one local feature descriptor of the target image includes: acquiring local feature descriptors of the target image, and selecting at least one local feature descriptor from all the local feature descriptors according to bit limits and attributes of the local feature descriptors.

Here, the bit limits are limits to the length of a bit stream of a local feature descriptor in a current environment; and the attributes of a local feature descriptor are attribute information such as a scale, a coordinate, a response peak value and a position about the local feature descriptor. The embodiments of the present disclosure are illustrated with the attributes of only several local feature descriptors, and the range of the attributes of the local feature descriptors is not limited.

The descriptor acquisition unit 31 acquires all local feature descriptors of the target image using a local feature descriptor extraction algorithm, determines current bit limits according to input parameters, selects local feature descriptors using a relevant feature point selection algorithm so as to obtain a subset of original local feature descriptors, the size of the subset being decided by the bit limits, and then sends the selected at least one local feature descriptor to the quantization unit 32.

In the present embodiment, the local feature descriptor may be any local feature descriptor applicable to local feature expression of an image, or may be any other feature vector. In the present embodiment, an SIFT descriptor is taken as an example. The process of selecting at least one local feature descriptor from all local feature descriptors according to the bit limits and the attributes of the local feature descriptors is introduced. Here, all SIFT descriptors may be acquired in an existing extraction mode, which will not be elaborated in the present embodiment.

In the embodiments of the present disclosure, the descriptor acquisition unit 31 trains a feature point selection model offline according to information such as an SIFT scale, a coordinate and a response peak value, constructs a data set of matching point pairs and a data set of non-matching point pairs, quantizes value ranges of four attributes namely an SIFT scale, a coordinate, a response peak value and a distance to the image centre using a statistical method, calculates the number of matching points and the number of non-matching points within each attribute range, and obtains a score of each attribute range by dividing a total number by the number of the corresponding matching points, wherein the total number of the matching points and the non-matching points is the sum of the number of the matching points and the number of the non-matching points.

A score of importance of an SIFT feature is a score of a range of attributes corresponding to successive multiplication of an SIFT scale, a coordinate, a response peak value and a distance to an image centre. All of the acquired local feature descriptors are ranked by importance, and descriptors ranked in the top by importance are selected as a subset. In the present embodiment, in the case where the total bit amount is limited to 4096 bytes, all of the acquired local feature descriptors are ranked by importance using a feature point selection model, descriptors are ranked in the top 300 are selected usually, and if the number of the local feature descriptors of an image is smaller than 300, all of the local feature descriptors are selected. The local feature descriptors are subsequently compressed, such that a finally acquired bit stream is not greater than 4096 bytes. In the case where the total bit amount is limited to 16384 bytes, all of the acquired local feature descriptors are ranked by importance using the feature point selection model, wherein descriptors are ranked in the top 900 are selected usually, while if the number of the local feature descriptors of an image is smaller than 900, all of the local feature descriptors are selected; and the local feature descriptors are subsequently compressed, such that a finally acquired bit stream is not greater than 16384 bytes. Here, the number of the local feature descriptors is decided according to the property of an image. Local feature descriptors carry out description on the basis of interest points of an image, therefore, the number of the interest points of the image is decided according to the property of the image and an interest-point detection algorithm.

The quantization unit 32 is configured to carry out multi-stage vector quantization on the selected at least one local feature descriptor according to a pre-set code book, and quantize the at least one local feature descriptor as a feature code stream,

wherein the feature code stream includes serial numbers of code words obtained by the multi-stage vector quantization, and the serial numbers of the code words include serial numbers of original-local-feature-descriptor quantization code words and serial numbers of multi-stage-residual-vector quantization code words.

The quantization unit 32 is configured to repeatedly carry out next-level vector quantization on a residual formed by subtracting the quantized local feature descriptor from the original local feature descriptor.

Each local feature descriptor is quantized using the pre-set code book so as to form code words. Here, the dimension of the code book shall match with the dimension of a current local feature descriptor, and the code words are basic vectors identical to the currently quantized local feature descriptor in dimension.

An image descriptor of an image is expressed using the basic vectors, such that a space smaller than the local feature descriptor is occupied, thereby achieving the compression effect. By taking a simple quantization as an example, for a two-dimensional local feature descriptor, there are two code words (0, 0) and (1,1) in the code book; if a closest point of a local feature descriptor in distance is (0, 0), the local feature descriptor is quantized to be (0, 0), and if a closest point in distance is (1, 1), the local feature descriptor is quantized to be (1, 1). In an expression process, the occurrence frequencies of the code words (0, 0) and (1,1) can be used for expression. Thus, the compression effect can be achieved.

A code book training method includes, but is not limited to, a traditional K-means clustering method, and the number of code words in the code book can be set according to actual memory restraints and relevant conditions. In the present embodiment, the code book training method adopts a K-means method, and a code book is obtained by a sample data training cluster centre; and a distance measurement mode adopts a traditional Euclidean distance.

It is to note that under different bit limit conditions, the code book can be shared so as to reduce the memory consumption of a quantizer. For example, an SIFT descriptor is divided into four segments of 32-dimension segmented local feature descriptors in the present embodiment. When the total bit amount of the local feature descriptors is limited to 1024 bytes, each segment corresponds to four code books, respectively corresponding to a segmented local feature descriptor, and each code book has 128 code words; and when the total bit amount of the local feature descriptors is limited to 2048 and 4096 bytes, code books are shared, each segment corresponds to eight code books, respectively corresponding to a segmented local feature descriptor, and each code book has 64 code words. Thus, storage spaces of 8*64*16=8192 dimension units can be saved for the memory of the quantizer.

In one embodiment, next-level re-segmentation and re-quantization can be repeatedly carried out on a residual formed by subtracting a quantized local feature descriptor from an original local feature descriptor according to a quantization hierarchy demand, so as to improve the quantization accuracy until the demand is met.

After a local feature descriptor is quantized, code words, namely a segment of basic vectors, are obtained. The quantization unit 32 can carry out dimension division on a residual vector formed by subtracting the quantized local feature descriptor from the original local feature descriptor with reference to a previous quantization mode, train a code book of the residual vector, and quantize sub-vectors of the residual vector. A quantization vector of the residual vector and the previously-formed quantized descriptor are added to form a new-level quantized descriptor, and meanwhile, the new-level quantized descriptor and the original local feature descriptor form a new residual. This step can be continuously executed until a demand is met. Here, the demand may refer to that a quantization error between the original local feature descriptor and the quantized descriptor is smaller than a certain threshold, or may be a pre-set quantization hierarchy parameter. If non-destructive quantization is needed, a residual vector on the last layer can be entropy-coded.

Under different bit limit conditions, code books for quantizing residual vectors may be shared as well, so as to reduce the memory consumption of a quantizer. In the present embodiment, when the total bit amount of a local feature descriptor is limited to 1024 bytes, a residual vector is no longer quantized; and when the total bit amount of a local feature descriptor is limited to 2048 bytes, a residual vector is quantized as one of 16 code words using a code book.

The device further includes a transformation unit 33, configured to transform, after the at least one local feature descriptor of the target image is selected, the selected at least one local feature descriptor.

Correspondingly, the descriptor acquisition unit 31 is further configured to send the selected at least one local feature descriptor to the transformation unit 33; and the transformation unit 33 is further configured to send the orthogonally transformed at least one local feature descriptor to the quantization unit 32.

The transformation of the selected at least one local feature descriptor includes, but is not limited to, orthogonal transformation of the selected at least one local feature descriptor.

In the embodiments of the present disclosure, orthogonal transformation is taken as an example. The orthogonal transformation may be transformation of any orthogonal transformation algebraic definition, such as DCT and KL Transform. In the embodiments of the present disclosure, the step of orthogonally transforming a selected local feature descriptor is optional, or the local feature descriptor may be not transformed. The energy of the local feature descriptor can be gathered in corresponding successive dimensions by transformation of the local feature descriptor, such that subsequent operations can be facilitated. In the present embodiment, DCT is taken as an example. After DCT is carried out on an SIFT local feature descriptor, most pieces of information contained by the local feature descriptor will be contained in low-frequency areas, namely first several to dozens of dimensions after transformation.

The device further includes a segmentation unit 34, configured to segment the selected at least one local feature descriptor to form a plurality of segmented local feature descriptors.

Correspondingly, the transformation unit 33 is further configured to send the orthogonally transformed local feature descriptors to the segmentation unit 34; and the segmentation unit 34 is further configured to send the segmented local feature descriptors to the quantization unit 32.

After the segmentation unit segments the selected at least one local feature descriptor, the quantization unit 32 is further configured to: quantize each segment of the at least one local feature descriptor using the pre-set code book, so as to obtain a current-stage quantization code word vector; and splice the current-stage quantization code word vectors obtained by quantizing all segments of the at least one local feature descriptor, and compute a residual vector obtained by subtracting a result obtained by splicing the current-stage quantization code word vectors from the selected at least one original local feature descriptor; the segmentation unit 34 is further configured to: re-segment the residual vector; and the quantization unit 32 is further configured to: re-quantize the residual vector, so as to obtain next-stage quantization code word vectors.

The quantization unit 32 carries out multi-stage vector quantization on the segmented local feature descriptors, and quantize the segmented local feature descriptors to be a feature code stream, wherein the feature code stream includes serial numbers of code words obtained by the multi-stage vector quantization. Or, in the embodiments of the present disclosure, non-segmentation of a local feature descriptor is an exception of segmentation of a local feature descriptor, and is equivalent to division of a local feature descriptor into only one segment.

For example, the segmentation unit 34 can decompose a randomly selected local feature descriptor into a plurality of segments so as to form a plurality of segmented local feature descriptors, and the dimensions of each segmented local feature descriptor may be identical or different. Here, a local feature descriptor may be not segmented. It is to note that the segmented local feature descriptors are not needed to be successive in dimension, and it can be considered that original local feature descriptors are recombined in dimension as needed, and then are re-arranged and divided. By means of segmentation, the memory overhead of the adopted quantization code book can be lower under the condition that segmentation and non-segmentation have the same quantization error. By means of segmentation, subsequent matching can be accelerated. That is, a distance between vectors after segmentation can be obtained by accumulating table of pre-computed distances between segments.

Different segmentation mechanisms can be adopted for different bit limits. For example, in the present embodiment, when the total bit amount is limited to 512 bytes, segmentation is not carried out; and when the total bit amount is limited to 1024 bytes, the 128-dimension SIFT descriptor is equally divided into four segments, each segment having 12 bits. Thus, each local feature descriptor can be expressed as 4*12bit=6bytes, and meanwhile, 1024/6 local feature descriptors are selected to be coded.

Correspondingly, if local feature descriptors are segmented before being quantized, the quantization unit 32 quantizes each segment of the segmented local feature descriptors to obtain code words, namely a segment of basic vectors. The quantization unit 32 combines the segmented local feature descriptors in an original order to obtain quantized local feature descriptors. Next-level quantization is repeatedly carried out on a residual.

It is to note that for different hierarchies of residual vectors, segmentation modes may be identical or different, and code books may be identical or different. Under different bit limit conditions, code books for quantizing residual vectors may be shared as well, so as to reduce the memory consumption of a quantizer.

The device further includes an entropy-coding unit 35, configured to entropy-code, if input quantization is destructive quantization, a quantization residual.

The device further includes a storage unit 36, configured to store parameters needed by segmentation, code books needed by quantization and information about quantization hierarchy demand.

The descriptor acquisition unit, the quantization unit, the transformation unit, the segmentation unit, the entropy-coding unit and the storage unit in the device for compressing a local feature descriptor provided in the embodiment of the present disclosure may be all implemented by a processor, or may be implemented, certainly, by specific logic circuits, wherein the processor may be a processor in a mobile terminal or a server; and in practical application, the processor may be a Central Processing Unit (CPU), a Micro Processor Unit (MPU), a Digital Signal Processor (DSP) or a Field-Programmable Gate Array (FPGA).

In the embodiments of the present disclosure, if the method for compressing a local feature descriptor is implemented in a form of a software function module, and it is sold or used as an independent product, the product may also be stored in a computer readable storage medium. Based on this understanding, the technical solutions of the embodiments of the present disclosure may be substantially embodied in a form of a software product, or parts contributing to the traditional art may be embodied in a form of a software product. The computer software product is stored in a storage medium, including a plurality of instructions enabling a computer device which may be a personal computer, a server or a network device to execute all or some of the methods according to each embodiment of the present disclosure. The storage medium includes: various media capable of storing program codes, such as a U disk, a mobile hard disk, a Read Only Memory (ROM), a magnetic disk or an optical disc. Thus, the embodiments of the present disclosure are not limited to combination of any specific hardware and software.

Correspondingly, an embodiment of the present disclosure also provides a computer storage medium. Computer programs are stored in the computer storage medium. The computer program is configured to execute the method for compressing a local feature descriptor according to the embodiment of the present disclosure.

The above is only the preferred embodiments of the present disclosure, and is not used to limit the protective scope of the present disclosure.

**Claims**

1. A method for compressing a local feature descriptor, comprising:

   selecting at least one local feature descriptor of a target image; and
   carrying out multi-stage vector quantization on the selected at least one local feature descriptor according to a pre-set code book, and quantizing the selected at least one local feature descriptor as a feature code stream,
   wherein the feature code stream comprises serial numbers of code words obtained by the multi-stage vector quantization.

2. The method according to claim 1, wherein after the at least one local feature descriptor of the target image is selected, the method further comprises: transforming the selected at least one local feature descriptor.

3. The method according to claim 1, wherein the code words are basic vectors identical to the currently quantized at least one local feature descriptor in dimension.

4. The method according to claim 1 or 3, wherein carrying out multi-stage vector quantization on the selected at least one local feature descriptor according to the pre-set code book comprises:

> segmenting the selected at least one local feature descriptor;
> quantizing each segment of the at least one local feature descriptor using the pre-set code book, and obtaining a current-stage quantization code word vector; and
> splicing the current-stage quantization code word vectors obtained by quantizing all segments of the at least one local feature descriptor, computing a residual vector obtained by subtracting a result obtained by splicing the current-stage quantization code word vectors from the selected at least one original local feature descriptor, re-segmenting and re-quantizing the residual vector, and obtaining next-stage quantization code word vectors.

5. The method according to claim 1, wherein the serial numbers of the code words comprised by the feature code stream and obtained by the multi-stage vector quantization are: serial numbers of original-local-feature-descriptor quantization code words and serial numbers of multi-stage-residual-vector quantization code words.

6. The method according to claim 1, wherein when quantization is non-destructive quantization, the method further comprises: entropy-coding a final quantization residual.

7. A device for compressing a local feature descriptor, comprising:

> a descriptor acquisition unit, configured to select at least one local feature descriptor of a target image; and
> a quantization unit, configured to carry out multi-stage vector quantization on the selected at least one local feature descriptor according to a pre-set code book, and quantize the selected at least one local feature descriptor as a feature code stream,
> wherein the feature code stream comprises serial numbers of code words obtained by means of the multi-stage vector quantization.

8. The device according to claim 7, further comprising a transformation unit, configured to transform, after the at least one local feature descriptor of the target image is selected, the selected at least one local feature descriptor.

9. The device according to claim 7, further comprising: a segmentation unit, configured to segment the selected at least one local feature descriptor.

10. The device according to claim 7, wherein the quantization unit is further configured to: quantize each segment of the at least one local feature descriptor using the pre-set code book and obtain a current-stage quantization code word vector; and splice the current-stage quantization code word vectors obtained by quantizing all segments of the at least one local feature descriptor, and compute a residual vector obtained by subtracting a result obtained by splicing the current-stage quantization code word vectors from the selected at least one original local feature descriptor;
the segmentation unit is further configured to: re-segment the residual vector; and the quantization unit is further configured to: re-quantize the residual vector and obtain next-stage quantization code word vectors.

11. The device according to claim 7, further comprising an entropy-coding unit, configured to entropy-code a final quantization residual when quantization is non-destructive quantization.

12. A computer storage medium, having stored computer executable instructions therein for executing the method for compressing a local feature descriptor according to any one of claims 1 to 6.

Fig. 1

101

At least one local feature descriptor of a target
image is selected

102

Multi-stage vector quantization is carried out on
the selected at least one local feature descriptor
according to a pre-set code book, and the local
feature descriptor is quantized as a feature code
stream

Fig. 2

201

Local feature descriptors of a target image are acquired, and at least one local feature descriptor are selected from all the local feature descriptors according to bit limits and attributes of the local feature descriptors

202

The selected at least one local feature descriptor is transformed one by one

203

The transformed at least one local feature descriptor is segmented one by one

204

All segments of segmented at least one local feature descriptor are quantized one by one according to a pre-set code book

205

Next-level re-segmentation and re-quantization are repeatedly carried out on a residual formed by subtracting the quantized at least one local feature descriptor from original local feature descriptors until the quantization accuracy meets demands

206

A quantization residual is processed

Fig. 3

```
        ┌─────────────────────┐
        │ Descriptor acquisition │
        │       unit 31        │
        └─────────────────────┘
                  │        │  │
                  ▼        │  │
        ┌─────────────────┐│  │
        │  Transformation ││  │
        │     unit 33     ││  │
        └─────────────────┘│  │
                  │        │  │
                  ▼        │  │
        ┌─────────────────┐│  │
        │   Segmentation  │◀─┘  │
        │     unit 34     │──┐  │
        └─────────────────┘  │  │
                  ▲          │  │
        ┌─────────────────┐  │  │
        │  Storage unit 36│  │  │
        └─────────────────┘  │  │
                  │          │  │
                  ▼          ▼  ▼
        ┌───────────────────────┐
        │  Quantization unit 32  │
        └───────────────────────┘
                    │
                    ▼
        ┌───────────────────────┐
        │  Entropy-coding unit 35 │
        └───────────────────────┘
```

# INTERNATIONAL SEARCH REPORT

| International application No. |
|---|
| **PCT/CN2015/074160** |

### A. CLASSIFICATION OF SUBJECT MATTER

G06K 9/64 (2006.01) i

According to International Patent Classification (IPC) or to both national classification and IPC

### B. FIELDS SEARCHED

Minimum documentation searched (classification system followed by classification symbols)

G06K; H03M; H04N

Documentation searched other than minimum documentation to the extent that such documents are included in the fields searched

Electronic data base consulted during the international search (name of data base and, where practicable, search terms used)

WPI, EPODOC, CNPAT, CNKI: descriptor, codeword, codebook, segment, residual, local, part, partial, area, character, describe, description, compress, code, encode, quantization, vector, multiple, stage, multilevel, multilayer, table, list, muster, dictionary, wordbook, subsection, difference, error

### C. DOCUMENTS CONSIDERED TO BE RELEVANT

| Category* | Citation of document, with indication, where appropriate, of the relevant passages | Relevant to claim No. |
|---|---|---|
| Y | CN 102521618 A (PEKING UNIVERSITY), 27 June 2012 (27.06.2012), description, paragraphs 0096 and 0103-0113 | 1-12 |
| Y | CN 101292427 A (TELEFON AB L.M. ERICSSON), 22 October 2008 (22.10.2008), description, page 2, antepenultimate line to page 3, line 18 | 1-12 |
| A | CN 102360435 A (XIDIAN UNIVERSITY), 22 February 2012 (22.02.2012), the whole document | 1-12 |
| A | EP 2618331 A1 (PANASONIC CORPORATION), 24 July 2013 (24.07.2013), the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July 2015 (22.07.2015) | **05 August 2015 (05.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CI, Xue** Telephone No.: (86-10) **62413237** |

Form PCT/ISA/210 (second sheet) (July 2009)

## INTERNATIONAL SEARCH REPORT
### Information on patent family members

International application No.

**PCT/CN2015/074160**

| Patent Documents referred in the Report | Publication Date | Patent Family | Publication Date |
|---|---|---|---|
| CN 102521618 A | 27 June 2012 | None | |
| CN 101292427 A | 22 October 2008 | WO 2007035148 A2 | 29 March 2007 |
| | | EP 1946447 A2 | 23 July 2008 |
| | | JP 2009509456 A | 05 March 2009 |
| | | US 2009175550 A1 | 09 July 2009 |
| CN 102360435 A | 22 February 2012 | None | |
| EP 2618331 A1 | 24 July 2013 | CA 2810995 A1 | 22 March 2012 |
| | | WO 2012035781 A1 | 22 March 2012 |
| | | TW 201220715 A | 16 May 2012 |
| | | CN 103081007 A | 01 May 2013 |
| | | US 2013173263 A1 | 04 July 2013 |
| | | KR 20130112869 A | 14 October 2013 |
| | | RU 2013111526 A | 27 October 2014 |
| | | JP 5687706 B2 | 18 March 2015 |
| | | VN 34151 A | 25 June 2013 |
| | | ZA 201301886 A | 27 November 2013 |
| | | INM UMNP201300468 E | 09 May 2014 |

Form PCT/ISA/210 (patent family annex) (July 2009)